# EUROPEAN PATENT SPECIFICATION

(11) **EP 2 354 544 B1**
(45) Date of publication and mention of the grant of the patent: **15.04.2015**
(21) Application number: 10152958.4
(22) Date of filing: 08.02.2010
(51) Int. Cl.: F03D 11/00

(54) **Elastic element, suspension arrangement and wind turbine with suspension arrangement**
Elastisches Element, Aufhängungsanordnung und Windturbine mit Aufhängungsanordnung
Élément élastique, agencement de suspension et éolienne dotée de l'agencement de suspension

(43) Date of publication of application: 10.08.2011
(73) Proprietor: Vestas Wind Systems A/S, 8200 Aarhus N (DK)
(72) Inventor: Rüschoff, Ralf, 45711 Datteln (DE)
(74) Representative: Samson & Partner

(56) References cited:
- EP-A1- 0 192 380
- EP-A1- 1 645 774
- WO-A1-2009/121552
- DE-A1-102007 053 586
- US-A1- 2008 308 980

## Description

### FIELD OF THE INVENTION

The present invention relates to an elastic element adapted for connecting and being interposed between two parts of a wind turbine, and in particular for suspending a gear box at the machine carrier of the wind turbine, a suspension arrangement with at least one such elastic element and a wind turbine with at least one such suspension arrangement.

### BACKGROUND OF THE INVENTION

Elastic elements are provided in the wind turbine for suspending parts at the machine carrier of the wind turbine in order to damp forces and vibrations.

For example, from the patent applications EP 1 566 543 A1 and US 2008/0308980 A1 an elastomer spring element is known, which is used to suspend a gear box of a wind turbine to the machine carrier. From DE 10 2007 053 586 A1 a gear box suspension is known, where damping members with an elastic element are used.

From WO 2009/121552 different elastomer components are known, which can be used, e.g. in a base of a wind turbine.

A hydraulically damped mounting device for suspending a car engine is known from EP 0 192 380 A1. Another antivibration device for a vehicle is known from EP 1 645 774 A1.

Although the elastomer spring element as known from EP 1 566 543 A1 and US 2008/0308980 A1 may provide a satisfactory suspension of the gear box of a wind turbine, it is an object of the present invention to provide an improved elastic element for connecting at least two parts of a wind turbine together.

### SUMMARY OF THE INVENTION

According to a first aspect the invention provides a suspension arrangement for suspending a first part of at a second part of the wind turbine, wherein a drive train comprises one of the two parts and a machine carrier of a wind turbine comprises the other part of the two parts, in accordance with independent claim 1.

According to a second aspect, the invention provides a wind turbine, comprising a suspension arrangement in accordance with the first aspect, a machine carrier, and a gear box, wherein the gear box is suspended with at least one suspension arrangement at the machine carrier.

Further aspects of the invention are set forth in the dependent claims, the following description and the drawings.

### BRIEF DESCRIPTION OF THE DRAWINGS

Embodiments of the present invention are explained by way of example with respect to the accompanying drawings, in which:
Fig. 1 schematically illustrates in a sectional view a machine carrier of a wind turbine at which a gear box is suspended with elastic elements in accordance with the present invention;
Fig. 2 schematically illustrates in a sectional view the shape of a gear box with mounting extensions;
Fig. 3 schematically illustrates in a sectional view the gear box suspension with two elastic elements; and
Fig. 4 schematically illustrates two elastic elements and their hydraulic connection.

### DETAILED DESCRIPTION OF PREFERRED EMBODIMENTS

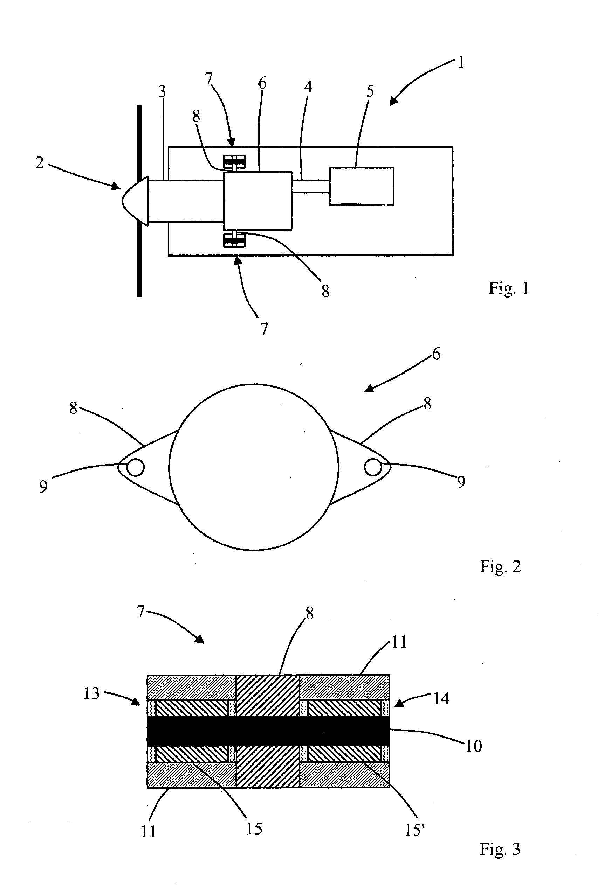

Fig. 1 schematically illustrates in a sectional view a machine carrier 1 of a wind turbine at which a gear box 6 is suspended in accordance with the present invention. Before a detailed description of the preferred embodiments, general explanations are made.

As mentioned in the outset, elastic spring elements are known for connecting or suspending, e.g. a gear box of a wind turbine, or other elements of the drive train from the rotor of a wind turbine to the generator, at the machine carrier of the wind turbine.

Especially in the case of large wind turbines with higher outputs of, for example, more than two megawatts strong forces will act on the rotor blade, the rotor shaft and the drive train and also on any arrangements bearing the drive train.

Forces acting on the rotor of the wind turbine are transferred via the rotor shaft also to other elements of the drive train, such as the gear box or the generator. Thus any yawing, bending, pushing or tilting of the rotor is transferred to the rotor shaft and resulting forces are thereby transferred also to the gear box.

Typically, the gear box is suspended at two mounting extensions, also referred to as torque arms, which are positioned at the left and right side with respect to the longitudinal axis of the cylindrical shaped gear box. Generally, the gear box is suspended at the machine carrier of the wind turbine, which itself is located in the nacelle of the wind turbine. Due to the torque of the rotor which is transferred to the rotor shaft, also the gear box is subject to this torque. With the suspension of the gear box at its torque arms, a rotation of the gear box around its longitudinal axis is prevented.

From the applications EP 1 566 543 Al and US 2008/0308980 Al mentioned in the outset, it is known to suspend the gear box at the torque arms with spring elements. The torque arms, as disclosed in theses prior art documents, have a rectangular shape and are suspended in a yoke. The spring elements are positioned on an upper and lower flat surface of each torque arm and they are interposed between the torque arm and the yoke. The spring elements are filled with a hydraulic fluid to adjust the stiffness of the spring element and they are crosswise connected via hydraulic conduits to each other such that hydraulic fluid can be discharged from one spring element to another spring element. For example, a spring element on the upper surface of the left torque arm is connected to a spring element at the lower surface of the right torque arm and vice versa. In the case that the gear box rotates about its longitudinal axis or is displaced upwardly or downwardly in a vertical direction the torque arms exert respective pressure forces on the spring elements. For instance, when the gear box is vertically displaced, the hydraulic fluid is discharged from the spring elements at the upper or lower surface of the torque arms into the opposite spring elements at the lower or upper surface due to the torque arms pressing onto the respective spring elements. In the case of a rotational displacement of the gear box, the torque arms exert a force on the crosswise connected spring elements, e.g. the upper left and the lower right spring element which are connected to each other, such that the hydraulic fluid can not be discharged. Hence, in the case of the vertical displacement, the spring elements have a lower stiffness than in the case of the rotational displacement.

The inventor has recognized that the suspension of the gear box, as disclosed in EP 1 566 543 Al and US 2008/0308980 A1, is not able to damp forces or vibrations acting, for example, in a horizontal direction, perpendicular to the longitudinal axis of the gear box, which is in parallel to the drive train. Moreover, the spring element of this prior art is basically flat and planar and the stiffness is only adjustable in the vertical direction. Thus, the spring element is not usable for other suspension designs, for example, for a gear box, which does not have planar surfaces between which the spring element can be interposed.

Furthermore, the inventor has recognized that the gear box suspension, as disclosed in 1 566 543 A1 and US 2008/0308980 A1, is not able to deal with forces which are generated when the gear box is tilted in the direction of the drive train of the wind turbine, since in this case the stiffness of the elastic element is not adjusted. Moreover, the rectangular torque arm which is suspended in the yoke is not able to reliably prevent the tilting of the gear box.

In the embodiments described, an elastic element is adapted for connecting two parts of a wind turbine, and in particular for suspending a gear box at the machine carrier of the wind turbine. The elastic element is adapted to be interposed between the two parts and to thereby damp forces and vibrations acting between these two parts of the wind turbine, e.g. between a gear box and a gear box suspension fixed to the machine carrier of the wind turbine.

The elastic element has an outer surface adapted for being suspended at a first part of the two parts of the wind turbine and an inner surface adapted for being suspended at a second part of the two parts of the wind turbine. The elastic element has an open cavity in its inside, which is limited by the inner surface.

In some embodiments, the open cavity extends at least partially along a main symmetry axis of the elastic element and is open at least at one side of the elastic element to receive the second part of the wind turbine through this opening. For example, in the case of a cylindrical or conical shaped elastic element, the main symmetry axis is the longitudinal symmetry axis of the cylindrical or conical shaped elastic element and the open cavity extends along this longitudinal axis. In some embodiments, the open cavity extends from one side to the other side of the elastic element, such as from one end side of cylinder shape to the other end side, i.e. from one end wall to the other end wall. The open cavity can be open at one side or at both sides.

Moreover, the elastic element has at least two elastically compressible chambers, which are separate from each other and which are positioned between the outer surface and the inner surface of the elastic element. Thus, the elastically compressible chambers are also separate from the open cavity. Each elastically compressible chamber has at least one line connection through which a hydraulic fluid can be charged and discharged for adjusting the volume of the elastically compressible chamber. In the following the "elastically compressible chamber" is also referred to as "chamber" for simplification reason. The chambers can be connected via a hydraulic fluid conduit to each other and/or to a hydraulic fluid source outside the elastic element. The chambers are adapted to be filled with a hydraulic fluid and, thus, the chambers are substantially closed, in some embodiments, except for the at least one line connection through which the hydraulic fluid can be discharged.

By charging or discharging hydraulic fluid into/from the chambers, the volume of the chamber can be adjusted. When hydraulic fluid is charged into the chamber, the volume of the chamber increases and when hydraulic fluid is discharged from the chamber, the volume decreases. The volume deformation of the chamber is elastically. By increasing and decreasing the volume of the chamber, also the distance between the outer and inner surface of the elastic element increases or decreases in the vicinity or region of the chamber.

Moreover, since the hydraulic fluid is incompressible in some embodiments, the elastic element becomes stiffer in the case that the chamber is filled with hydraulic fluid (and cannot discharge) than in the case that the chamber is not filled with hydraulic fluid. Thus, the stiffness of the elastic element can be adjusted by charging and discharging hydraulic fluid into/from the chamber and by controlling the flow of the hydraulic fluid into and out of the chamber. When the chamber is filled with hydraulic fluid and the hydraulic fluid is not allowed to discharge from the chamber, the chamber becomes stiff due to the incompressibility of the hydraulic fluid in it. In the case that the hydraulic fluid can discharge/charge with a certain flow rate from/into the chamber, the chamber becomes "softer", i.e. it has a lower stiffness than in the case that the hydraulic fluid can not discharge, and the chamber provides a certain damping which depends i.a. on the charging/discharging flow rate of the hydraulic fluid. Thus, by controlling the flow rate of the hydraulic fluid, the stiffness and damping characteristics of the chamber can be controlled.

Hence, when the chamber is filled with hydraulic fluid and the hydraulic fluid can not be discharged, the distance between the outer and inner surface can basically not be changed in the region of the chamber and the elastic element is stiff or nearly incompressible in the region of the chamber. In the case that the hydraulic fluid can flow into and out of the chamber with a certain flow rate, the distance between the outer and inner surface can vary and the elastic element can be elastically deformed in the region of the chamber and has therefore a lower stiffness. Hence, the elastic element can damp forces acting between the outer and inner surface of the elastic element by accommodating the forces and varying the distance between the outer and inner surface accordingly. The movement of the inner surface with respect to the outer surface is damped by the hydraulic fluid being charged and discharged from the chambers.

The inner surface (and the open cavity) is adapted for suspending a part of the wind turbine, e.g. a torque arm of a gear box, by receiving a stiff element. The stiff element can be, for example, a pin which is connected to the torque arm of the gear box or which is fixed to the torque arm.

The elastic element itself is suspended at a second part of the wind turbine, e.g. a gear box suspension. Thus, the elastic element is interposed between the two parts of the wind turbine which are connected to each other. By adjusting the stiffness of the elastic element, in the way explained above, also the stiffness of the connection of the first and second part can be adjusted.

In some embodiments, the chambers are opposite to each other such that the open cavity is positioned between the chambers. With the opposite arrangement of the chambers, it is possible to adjust the stiffness in the above sense in one plane, e.g. a vertical or horizontal plane. For example, when a stiff element, such as a rod or pin, is partially positioned in the open cavity and the elastic element is suspended at the outer surface in a yoke or similar bearing or suspension, and the chambers are positioned above and below the open cavity, i.e. the chambers are positioned in a vertical plane, the stiffness of the elastic element can be adjusted in the vertical direction. In the case that the chambers are filled with hydraulic fluid and the fluid can not discharge, the elastic element is nearly incompressible in the vertical direction, when the stiff element presses against the chambers. When the hydraulic fluid can be discharged from one chamber and respectively charged into the opposite chamber, the chambers are elastically deformable and have a lower stiffness. Hence, in this case the elastic element will damp forces and vibrations acting on the outer and/or inner surface. The chambers can be connected to an outer source of hydraulic fluid and/or they can be interconnected to each other, such that, for example, a hydraulic fluid is discharged from the upper to the lower chamber and vice versa, in the case that the stiff element acts on the upper or lower chamber.

The elastic element can further comprise an elastic material, which is interposed between the outer and the inner surface and the elastic material can extend at least partially around the open cavity such that it surrounds the open cavity at least partially. Moreover, the chambers can be formed in the elastic material. Thus, the chambers can be openings in the elastic material, which are completely closed by the elastic material except for the at least one line connection.

In some embodiments, the elastic element, i.e. the inner and/or outer surface, and the elastic material, respectively, have a cylindrical and/or conical shape. The elastic element can have the shape of a perpendicular cylinder with a circular basal plane. In other embodiments, the elastic element and/or the elastic material has a multiangular basal plane, e.g. a triangular or quadrangular shape, or another shape, such as an elliptical one. In still other embodiments, the elastic element has the shape of a slant cylinder or is slant and conical. The elastic element can also have a shape, which is a mixture of one or more the above characteristics, e.g. a slant triangular cylindrical shape.

Similarly, the open cavity within the elastic element can have a circular, elliptical or angular cross section or combinations thereof.

In some embodiments, the elastic material comprises an elastomer, which is made e.g. of an elastic plastic, or any other suitable material which has a certain elasticity, such as natural rubber.

The outer and inner surface, respectively, can comprise or can be formed by an outer and an inner shell between which, e.g. the elastic material is sandwiched. In some embodiments, the elastic material is vulcanized to the shells, which can be made of a metal, e.g. stainless steel. The inner and/or outer shell can have the same shape as the elastic material or the shape can be different.

The elastic element comprises in some embodiments at least two fluid conduits, each being in fluid communication with one chamber through the respective line connections, such that a hydraulic fluid can be charged/discharged into/from the chambers. The fluid conduits can be connected to an outside hydraulic fluid reservoir. In some embodiments the fluid conduits interconnect the chambers, e.g. of different elastic elements with each other. In still other embodiments, some chambers of the same or of different elastic elements are interconnected to each other, while other chambers are connected to the outside, e.g. to a hydraulic fluid reservoir.

A hydraulic fluid is, e.g. an incompressible fluid, and comprises water, oil, silicone oil or any other suitable fluid. By conducting the hydraulic fluid into the chambers the stiffness of the elastic element can be adjusted.

By filling the incompressible hydraulic fluid in the chambers and by discharging the hydraulic from the chambers, the stiffness of the elastic material and, thus, of the elastic element is adjustable, as explained above.

In some embodiments, the elastic element comprises four chambers. The four chambers are opposite to each other in a pairwise manner. In other words, a first and a second chamber of the four chambers are opposite to each other and a third and a fourth chamber are opposite to each other, such that the open cavity is positioned between the opposite chambers.

The chambers can be distributed around the circumference between the inner and outer surface, and, for example, around the circumference of the elastic material. In the case of four chambers, the chambers are positioned in a cross like manner in some embodiments, i.e. the axes traversing each pair of opposite chambers are perpendicular to each other. In some embodiments the chambers are distributed equidistant around the circumference.

Generally, the chambers can have any suitable shape which is able to receive a certain amount of hydraulic fluid. In some embodiments, each chamber has at least one line connection to the outside of the elastic material. In some embodiments, the chambers extend through the elastic element along the longitudinal direction. Additionally, the chambers extend in the circumferential direction. In the case of four chambers, each chamber extends, for example, nearly up to a quarter of the circumference.

In some embodiments, the elastic material has a lower stiffness in the region of the chambers, when the chambers are not filled with a hydraulic fluid and has a higher stiffness, when hydraulic fluid is within the chambers. Thereby, the stiffness of the elastic material is adjustable when the charge and discharge of the hydraulic fluid is controlled in a manner as explained above.

In some embodiments, there can also be two or more chambers consecutively positioned in the longitudinal direction of the elastic element, which can be in fluid communication, such that fluid can be charged and discharged from one chamber to the other in the case that a force is not acting equally on the chambers. Thus, in such a case of non equal forces acting on the consecutively positioned chambers, the stiffness of the elastic element is low. In the case that a force acts equally on the consecutively positioned chambers, the fluid can not be discharged from one chamber to another such that the stiffness of the elastic element is higher, since the force is acting basically against the chambers with the incompressible fluid in it.

In some embodiments, a suspension arrangement for suspending a part, in particular a gear box, of a wind turbine at the machine carrier of the wind turbine comprises at least two elastic elements, as explained above.

The elastic elements are consecutively positioned along their longitudinal axes. A stiff element, such a rod, can be positioned such that it extends through both open cavities of the consecutively arranged elastic elements. When the two elastic elements are suspended together with the stiff element in a bearing, as explained above, tilting forces, which are acting e.g. in a vertical plane, can be absorbed by the elastic elements.

In other embodiments, one elastic element is positioned at each torque arm. The elastic element can have two or more chambers which are, e.g. consecutively positioned in the longitudinal direction, as explained above. Thus, in such embodiments the stiff element may extend only through one elastic element. This embodiment basically corresponds to embodiments where two elastic elements are consecutively positioned along their longitudinal axes and the following description for this embodiment applies also on the embodiment with the chambers being consecutively positioned. Moreover, also a mixture of these two embodiments exists and the following description also applies on such mixed embodiments.

The two elastic elements of the suspension arrangement can each comprise at least four chambers, which are pairwise opposite to each other, as explained above, i.e. a first and a second chamber are opposite to each other and a third and a fourth chamber are opposite to each other and they can be distributed, e.g. in a cross-like manner.

A first elastic element of the two elastic elements can be connected, e.g. via fluid conduits, to a second elastic element of the two elastic elements, such that chambers of the first elastic element can be in fluid communication with chambers of the second elastic element. In some embodiments, each single chamber of the first elastic element is in connection with a single chamber of the second elastic element such that, for example, a single chamber of the first elastic element is in fluid communication with a single chamber of the second elastic element.

Moreover, the chambers which have (almost) the identical alignment can be in fluid communication. For example, the first and the second elastic elements are such positioned that the four chambers of the first elastic element and the four chambers of the second elastic element are aligned to each other. In some embodiments, the elastic elements are such positioned that the first chambers, i.e. the first chamber of the first elastic element and the first chamber of the second element, are on the left side, and the second chambers, i.e. the second chamber of the first elastic element being opposite to the first chamber of the first elastic element and the second chamber of the second element being opposite to the first chamber of the second elastic element, are on the right side. The left and right sides are the sides which are (nearly) on the left and right side on a horizontal plane which is running along the longitudinal axis along the longitudinal symmetric axis of the elastic element with the cylindrical shape. The third chambers of the first and second elastic elements are on the bottom side and the fourth chambers, which are opposite to the third chambers, are on the top side of the elastic elements. The top and bottom side is the side of the cylinder of the elastic element which is above and below the horizontal plane. In other words, the first and second chambers are on a horizontal line positioned and the third and fourth chambers are on a vertical line. The horizontal line and the vertical line are (nearly) perpendicular to each other. Moreover, the suspension arrangement can be aligned, for example, to a main axis of the drive train and/or to the longitudinal axis of the gear box, such that the vertical and horizontal lines on which the chambers are lying are also aligned to respective vertical and horizontal lines of the gear box, e.g. in a parallel manner.

In such embodiments, the first chamber of the first elastic element can be connected via a first fluid conduit to the first chamber of the second elastic element, the second chamber of the first elastic element can be connected via a second fluid conduit to the second chamber of the second elastic element, the third chamber of the first elastic element can be connected via a third fluid conduit to the third chamber of the second elastic element, and the fourth chamber of the first elastic element can be connected via a fourth fluid conduit to the fourth chamber of the second elastic element. In such embodiments, the first and second elastic element can be consecutively positioned on their longitudinal axes, as explained above. With this specific hydraulic connection of the respective chambers, a tilting of a stiff element which is inserted into the longitudinal cavity of both elastic elements will discharge the hydraulic fluid of the chambers on which the force is acting. Thus, in this case the elastic elements will have a lower stiffness, since the hydraulic fluid flows from one chamber to the other, as explained above. In the case of a torque, which will rotate the gear box around the longitudinal axis, the force is acting on the chambers of the first and second elastic elements which are interconnected via the hydraulic fluid conduit and, thus, the hydraulic fluid can not be discharged of the chambers and the elastic element has a higher stiffness.

In some embodiments, a wind turbine comprises a suspension arrangement, as discussed above, a machine carrier, and a gear box. The machine carrier is located in a nacelle of the wind turbine and all parts of the drive train are typically mounted to the machine carrier. The gear box is suspended with at least one suspension arrangement at the machine carrier. The gear box can be suspended with two suspension arrangements, each suspension arrangement located at one torque arm of the gear box. Thus, when suspending the gear box with the suspension arrangement, a tilting of the gear box and/or of the stiff element will adjust the elastic elements of the suspension arrangements such that they have a lower stiffness, as explained above,, while in case of rotational movement and/or vertical and/or horizontal displacement, the elastic elements have a higher stiffness, ax explained above. In this case a load on the gear box and also on the drive train can be lowered or avoided, when the gear box is securely mounted to machine carrier.

Returning to the schematic sectional view in Fig. 1, the suspension of a gear box 6 at a machine carrier 1 of wind turbine is illustrated. The gear box 6 is suspended at the machine carrier 1 with a gear box suspension 7 at each one of the two mounting extension 8, also referred to as torque arms 8.

The gear box 6 is part of a drive train extending from a rotor 2, via a rotor shaft 3, the gear box 6, and via a generator shaft 4 to the generator 5. Rotations of the rotor 2 are transferred via the rotor shaft 3 to the gear box 6 which translates the rotation speed of the rotor shaft 3 into another (higher) rotation speed, which is in turn transferred via the generator shaft 4 to the generator 5.

Beneath the pure torque exerted by the rotor 2, also any other forces acting on the rotor 2 will be transferred over the rotor shaft 3 to the gear box 6, which can lead to high loads on the gear box 6 and to damages of the gear box 6. Typically, the rotor shaft 3 and the gear box 6 are mounted via a 3-point or a 4-point suspension at the machine carrier. The gear box 6 is suspended in both cases at the two torque arms 8, which are outwardly extending from gear box 6 on each side, i.e. on the left and right side in a view along the longitudinal axis of the gear box 6 (see Fig. 2).

The drive train, i.e. also the rotor shaft 3 and the gear box 6 are tilted with a little angle of, e.g. about 6°, with respect to the bottom plane of the machine carrier 1. Thus, also the gear box 6 has to be suspended with this angle.

The gear box 6 is suspended with a pin 10 (see also Fig. 3), which is inserted in a through hole 9 (see Fig. 2) which is positioned in an outer region of the torque arm 8. As can also be taken from the sectional view of the gear box suspension 7 in Fig. 3, the gear box suspension 7 has a front support structure 11 and a rear support structure 12. The front support structure 11 has a through hole 13 and the rear support structure 12 has a through hole 14, through which the pin 10 extends. The torque arm 8 is interposed between the front support structure 11 and the rear support structure 12. Thus, the pin 10 extends - from the left to the right in Fig. 3 - through the through hole 13 of the front support structure 11, then through the through hole 9 of the interposed torque arm 8 and through the through hole 14 of the rear support structure 12. As can also be seen in Fig. 1, the pin 10 is substantially parallel to the longitudinal axis of the gear box 6 and to the drive train.

Thus, also the pin 10 has to be tilted at (nearly) the same angle as the drive train and as the gear box 6. However, due to clearances in the bearings of the drive train, it is possible that the pin 10 cants in the through holes 9, 13 and 14 of the torque arms 8 and front 11 and rear support structures 12. Thus, in the case that the canted pin 10 is torqued down, a torque might act on the gear box 6 which leads to a load on the gear box 6, which in turn could lead to damages. Moreover, any bending of the drive train, e.g. of the rotor shaft 3, will exert a bending or other force also on the gear box 6, which leads, e.g. to a force acting in a vertical or horizontal direction on the gear box 6 by tilting it.

In order to address not only the problem of the torque acting on the gear box 6, but also bending forces or vertical forces acting on the gear box 6 which origin, e.g. from clearances in the bearings of the drive train, misalignments of one or more components in the drive train, bending of the machine carrier 1, etc., each gear box suspension 7 has two elastic elements 15, 15'. A front elastic element 15 is positioned in the through hole 13 of the front support structure 11 and a rear elastic element 15', which is identical to the front elastic element 15 in this embodiment, is positioned in the through hole 14 of the rear support structure 12 such that the front 15 and rear elastic elements 15' are positioned consecutively along their longitudinal axes. The front 15 and rear elastic elements 15' surround the pin 10, such that any forces which are transferred, e.g. via the rotor shaft 3 or other components of the drive train to the gear box 6 and which are acting on the pin 10 are also acting on the elastic elements 15, 15'.

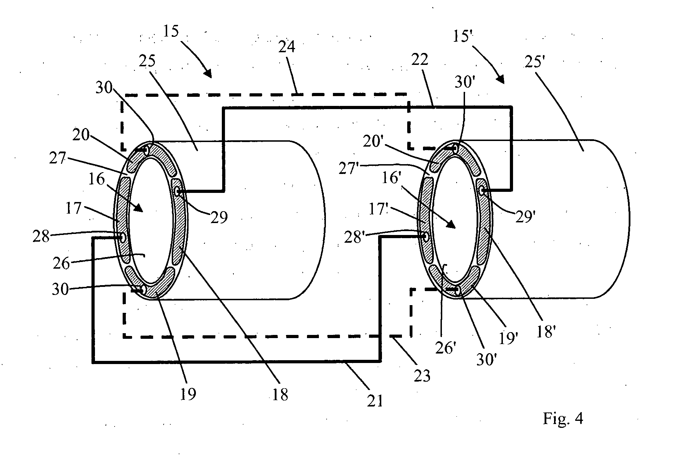

In order to receive and to surround the pin 10, the front 15 and rear elastic elements 15' each have a longitudinal cavity 16, 16' extending along the longitudinal symmetry axis of the elastic elements 15, 15', as can be taken from the schematic view of Fig. 4. The longitudinal cavities 16, 16' extending along the longitudinal axis of front 15 and rear elastic elements 15' are each open on both sides.

The front 15 and rear elastic elements 15' each have a circular cylindrical shape and also the longitudinal cavities 16, 16' each have a circular cylindrical shape, such that the round pin 10 fits into the longitudinal cavities 16 and 16'. Hence, the pin 10 is surrounded by the front elastic element 15 and rear elastic element 15'.

The front elastic element 15 comprises an elastic material 27 with four chambers 17, 18, 19, 20 in it and also the identical rear elastic element 15 comprises an elastic material 27' with four chambers 17', 18', 19', 20' in it. The chambers 17, 18, 19, 20, 17', 18', 19', 20' are equidistant distributed around the circumference of the respective front/rear elastic element 15, 15'.

A first pair of chambers 17 and 18 (17' and 18') of the front (rear) elastic element 15 (15') is on a horizontal line opposite to each other positioned and a second pair of chambers 19 and 20 (19' and 20') of the front (rear) elastic element 15 (15') is on a vertical line opposite to each other positioned. Thus, the four chambers 17, 18, 19, 20 and 17', 18', 19', 20' are each distributed in the elastic material 27, 27' around the circumference such that they lie on the two perpendicular axes off a cross and such that the longitudinal cavity 16 (16') is between the respective opposite chambers.

The first pair of chambers 17 and 18 (17' and 18') consists of a left chamber 17 (17') on the lefthand side of the longitudinal cavity 16 (16') and a right chamber 18 (18') on the right-hand side of the longitudinal cavity 16 (16') of the elastic element 15 (15') and the second pair of chambers 19 and 20 (19' and 20') consists of a bottom chamber 19 (19') below the longitudinal cavity 16 (16') and top chamber 20 (20') above the longitudinal cavity 16 (16'). Each one of the chambers 17, 18, 19, 20, 17', 18', 19', 20' extends longitudinally through the elastic material 27, 27' and up to a certain amount in the circumferential direction of the cylindrical elastic material 27, 27'.

The elastic material 27, 27' is made of an elastomer and it is each interposed between an outer shell 25, 25' and inner shell 26, 26' of the front 15 and rear elastic elements 15', respectively. The outer 25, 25' and inner shells 26, 26' can be made of a stiff material, such as stainless steel or similar. The elastic material 27, 27' is vulcanized on the outer 25, 25' and inner shells 26, 26' with the hydraulic fluid chambers 17, 18, 19, 20 and 17', 18', 19', 20', respectively, in it. Thus, the chambers 17, 18, 19, 20 and 17', 18', 19', 20' are completely closed except for terminals at which e.g. hydraulic fluid conduits 21-24 can be connected.

The stiffness of the elastic material 27, 27' can be adjusted by filling a hydraulic fluid into the chambers 17, 18, 19, 20 through respective line connections 28, 29, 30, 31 and into chambers 17', 18', 19', 20' through respective line connections 28', 29', 30', 31'. The elastic material 27, 27' has a low basic stiffness in the horizontal as well as in the vertical direction which increases, when hydraulic fluid is filled into the chambers 17, 18, 19, 20, 17', 18', 19', 20'. Hence, while the elastic elements 15, 15' have a lower basic stiffness in all directions, the stiffness can be selectively increased by selectively filling fluid into one or more of the chambers 17, 18, 19, 20 and 17', 18', 19', 20'.

The hydraulic fluid, such as water or hydraulic oil, is incompressible and, thus, in the case that the fluid is kept in one or more of the chambers 17, 18, 19, 20, 17', 18', 19', 20' such that it can not be discharged, the stiffness in these chambers 17, 18, 19, 20, 17', 18', 19', 20' filled with fluid is increased because of the incompressible fluid in it.

In the embodiment described, the front elastic element 15 and the rear elastic element 15' are connected to each other via hydraulic fluid conduits 21, 22, 23, 24 connected to the respective line connections 28, 29, 30, 31, 28', 29', 30', 31' and the chambers 17, 18, 19, 20, 17', 18', 19', 20' are filled with a hydraulic fluid.

Each chamber of the chambers 17, 18, 19, 20 of the front elastic element 15 is connected with a respective chamber 17', 18', 19', 20' of the rear elastic element 15' having the same or a similar position. The left chamber 17 of the front elastic element 15 is connected via the hydraulic conduit 21 to the left chamber 17' of the rear elastic element 15', the right chamber 18 of the front elastic element 15 is connected via the hydraulic conduit 22 to the right chamber 18' of the rear elastic element 15', the bottom chamber 19 of the front elastic element 15 is connected via the hydraulic conduit 23 to the bottom chamber 19' of the rear elastic element 15', and the top chamber 20 of the front elastic element 15 is connected vie the hydraulic conduit 24 to the top chamber 20' of the rear elastic element 15'.

With this specific hydraulic connection between the chambers of the front 15 and rear elastic elements 15' it is possible to address rotations of the gear box 6 as well as tilt movements adequately, and, thus, also reaction forces from misalignments and clearances in the drive train can be reduced.

In the case of a rotational movement of the gear box 6 around its longitudinal axis, the pin 10 will exert a similar force on the bottom chamber 19 (top chamber 20) of the front elastic element 15 and the bottom chamber 19' (top chamber 20') of the rear elastic element 15'. This means that the fluid is pressed out of both bottom chambers 19, 19' of the front 15 and rear elastic elements 15' which are connected to each other via the hydraulic conduit 23 such that the fluid can not be discharged out of the bottom chambers 19, 19' and, therefore, the front 15 and rear elastic elements 15' are nearly incompressible in this case and have a higher stiffness. Thus, the rotational force is directly transferred over the gear box suspension 7 to the machine carrier 1.

In the case of a vertical tilt movement of the gear box 6, for example, the pin 10 exerts a force on the top chamber 20 of the front elastic element 15 and on the bottom chamber 19' of the rear elastic element 15' (or vice versa in the case of an opposite tilt movement). Thus, the hydraulic fluid is discharged from the top chamber 20 via the hydraulic conduit 24 to the top chamber 20' and simultaneously the hydraulic fluid is discharged from the bottom chamber 19' to the bottom chamber 19 of the front elastic element 15. Thus, the elastic elements 15, 15' follow the tilt movement in a self-adjusting manner by deforming the respective chambers and changing the volume of the elastically compressible chambers and they have a lower stiffness in the chambers where the pin 10 exerts the force due the charging and discharging of the hydraulic fluid, and, thus, forces exerted by the tilt movement are at least reduced or even eliminated.

In a similar manner, the elastic elements 15, 15' are self-adjusting in the case of a horizontal tilt movement of the gear box 6. For instance, when the pin 10 exerts a force on the left chamber 17 of the front elastic element 15 and the right chamber 18' of the rear elastic element 15', hydraulic fluid is discharged from the left chamber 17 into the left chamber 17' of the rear elastic element 15' via hydraulic conduit 21 and hydraulic fluid is discharged from the right chamber 18' into the right chamber of the front elastic element 15 via hydraulic conduit 22 (or vice versa).

In the case of horizontal and vertical parallel movements of the gear box 6, i.e. horizontal and vertical displacements, the pin 10 will exert a force in the horizontal and vertical direction at the front 15 and rear elastic element 15', respectively, such that in both cases the hydraulic fluid cannot be discharged out of the chambers onto which the pin 10 presses and, thus, the elastic elements 15, 15' are nearly incompressible and the volume of the chambers not changed.

Thus, the gear box suspension 7 with the elastic elements 15, 15' is self-adjusting and provides a lower stiffness in the case of tilt movements in the vertical and horizontal direction of the gear box 6 and has a higher stiffness in the case of a rotational movement and/or vertical/horizontal displacements of the gear box 6.

## Claims

1. A suspension arrangement for suspending a first part (7) of a wind turbine at a second part (6) of the wind turbine, wherein a drive train comprises one of the two parts (6, 7) and a machine carrier (1) of the wind turbine comprises the other part of the two parts (6, 7), the suspension arrangement further comprising at least two elastic elements (15, 15'), wherein each of the elastic elements (15, 15') is adapted for connecting and being interposed between the first and second part (6, 7) of the wind turbine, each elastic element (15, 15') comprising:
an outer surface (25, 25') adapted for being suspended at the first part (7) of the wind turbine, an open cavity (16, 16') limited by an inner surface (26, 26') of the elastic element and adapted for being suspended at the second part (6) of the wind turbine, and at least two elastically compressible chambers (17, 18, 19, 20, 17', 18', 19', 20'), which are separate from each other and which are positioned between the outer surface (25, 25') and the inner surface (26, 26') of the elastic element, wherein each elastically compressible chamber (17, 18, 19, 20, 17', 18',19', 20') has at least one line connection (28, 29, 30, 31, 28', 29', 30', 31') through which a hydraulic fluid can be charged and discharged for adjusting the volume of the elastically compressible chamber (17, 18, 19, 20, 17', 18',19', 20'), wherein a first elastic element (15) of the two elastic elements (15, 15') is connected via fluid conduits (21, 22, 23, 24) to a second elastic element (15') of the two elastic elements (15, 15'), wherein the fluid conduits (21, 22, 23, 24) are connected to the line connections (28, 29, 30, 31, 28', 29', 30', 31') of the first and second elastic elements (15, 15'), and wherein the first (15) and second (15') elastic elements are consecutively positioned along their longitudinal axis.

2. The suspension arrangement of claim 1, wherein the chambers (17, 18, 19, 20, 17', 18', 19', 20') of at least one of the elastic elements (15, 15') are opposite to each other, such that the open cavity (16, 16') is positioned between the chambers (17, 18, 19, 20, 17', 18', 19', 20').

3. The suspension arrangement of claim 1 or 2, wherein at least one of the elastic elements (15, 15') further comprises an elastic material (17, 17') between the outer surface (25, 25') and the inner surface (26, 26'), extending at least partially around the open cavity (16, 16') and the elastically compressible chambers (17, 18, 19, 20, 17', 18', 19', 20').

4. The suspension arrangement of claim 3, wherein the elastic material (27, 27') comprises an elastomer.

5. The suspension arrangement of any one of the preceding claims, wherein the outer surface (25, 25') and/or the inner surface (26, 26') of at least one of the elastic elements (15, 15') has a cylindrical and/or conical shape.

6. The suspension arrangement of any of the preceding claims, wherein at least one of the elastic elements (157, 15') has a lower stiffness in the region of the chambers, when the chambers (17, 18, 19, 20, 17', 18', 19', 20') are not filled with a hydraulic fluid, and has a higher stiffness, when hydraulic fluid is within the chambers (17, 18, 19, 20, 17', 18', 19', 20').

7. The suspension arrangement of any one of the preceding claims, wherein the two elastic elements (15, 15') each comprise at least four elastically compressible chambers (17, 18, 19, 20, 17', 18', 19', 20') wherein a first (17, 17') and a second elastically compressible chamber (18, 18') are opposite to each other and a third (19, 19') and a fourth elastically compressible chamber (20, 20') are opposite to each other, such that the open cavity (16, 16') is positioned between the first (17, 17') and the second elastically compressible chamber (18, 18') and between the third (19, 19') and the fourth elastically compressible chamber (20, 20').

8. The suspension arrangement of any one of the preceding claims, wherein the first and the second elastic elements (15, 15') are such positioned that the four elastically compressible chambers (17, 18, 19, 20) of the first elastic element (15) and the four elastically compressible chambers (17', 18', 19', 20') of the second elastic element (15') are aligned to each other.

9. The suspension arrangement of any one of the preceding claims, wherein the elastic elements (15, 15') are such positioned that the first elastically compressible chambers (17, 17') are on the left side, the second elastically compressible chambers (18, 18') are on the right side, the third elastically compressible chambers (19, 19') are on the bottom side and the fourth elastically compressible chambers (20, 20') are on the top side with respect to the open longitudinal cavity (16, 16').

10. The suspension arrangement of any of the preceding claims, wherein the first elastically compressible chamber (17) of the first elastic element (15) is connected via a first fluid conduit (21) to the first elastically compressible chamber (17') of the second elastic element (15'), the second elastically compressible chamber (18) of the first elastic element (15) is connected via a second fluid conduit (22) to the second elastically compressible chamber (18') of the second elastic element (15'), the third elastically compressible chamber (19) of the first elastic element (15) is connected via a third fluid conduit (23) to the third elastically compressible chamber (19') of the second elastic element (15'), and the fourth elastically compressible chamber (20) of the first elastic element (15) is connected via a fourth fluid conduit (24) to the fourth elastically compressible chamber (20') of the second elastic element (15').

11. A wind turbine, comprising:
a suspension arrangement of any of the claims 1 to 10,
a machine carrier (1), and
a gear box (6),
wherein the gear box (6) is suspended with at least one suspension arrangement at the machine carrier (1).

12. The wind turbine of claim 11, wherein the elastic elements (15, 15') of the suspension arrangement provide a higher stiffness in the case of a rotational movement of the gear box (6) and a lower stiffness in the case of a tilt movement and/or horizontal and/or vertical displacement of the gear box (6).

## Patentansprüche

1. Aufhängungsanordnung zum Aufhängen eines ersten Teils (7) einer Windturbine an einem zweiten Teil (6) der Windturbine, wobei ein Antriebsstrang einen der zwei Teile (6, 7) umfasst und ein Maschinenträger (1) der Windturbine den anderen Teil der zwei Teile (6, 7) umfasst, wobei die Aufhängungsanordnung des Weiteren wenigstens zwei elastische Elemente (15, 15') umfasst, wobei jedes der elastischen Elemente (15, 15') ausgestaltet ist, den ersten und den zweiten Teil (6, 7) der Windturbine zu verbinden und dazwischen angeordnet zu sein, wobei jedes elastische Element (15, 15') umfasst:
eine äußere Oberfläche (25, 25'), die ausgestaltet ist, an dem ersten Teil (7) der Windturbine aufgehängt zu werden,
einen offenen Hohlraum (16, 16'), der durch eine innere Oberfläche (26, 26') des elastischen Elements beschränkt ist und ausgestaltet ist, an dem zweiten Teil (6) der Windturbine aufgehängt zu werden, und
wenigstens zwei elastisch komprimierbare Kammern (17, 18, 19, 20, 17', 18', 19', 20'), die voneinander getrennt sind und zwischen der äußeren Oberfläche (25, 25') und der inneren Oberfläche (26, 26') des elastischen Elements angeordnet sind, wobei jede elastisch komprimierbare Kammer (17, 18, 19, 20, 17', 18', 19', 20') wenigstens eine Leitungsverbindung (28, 29, 30, 31, 28', 29', 30', 31') aufweist, durch die ein Hydraulikfluid gefüllt und abgelassen werden kann, um das Volumen der elastisch komprimierbaren Kammer (17, 18, 19, 20, 17', 18', 19', 20') einzustellen, wobei ein erstes elastisches Element (15) der zwei elastischen Elemente (15, 15') über Fluidleitungen (21, 22, 23, 24) mit einem zweiten elastischen Element (15') der zwei elastischen Elemente (15, 15') verbunden ist, wobei die Fluidleitungen (21, 22, 23, 24) mit den Leitungsverbindungen (28, 29, 30, 31, 28', 29', 30', 31') des ersten und des zweiten elastischen Elements (15, 15') verbunden sind, und wobei das erste (15) und das zweite (15') elastische Element aufeinanderfolgend entlang ihrer longitudinalen Achse angeordnet sind.

2. Aufhängungsanordnung nach Anspruch 1, bei welcher die Kammern (17, 18, 19, 20, 17', 18', 19', 20') von wenigstens einem der elastischen Elemente (15, 15') einander entgegengesetzt angeordnet sind, so dass der offene Hohlraum (16, 16') zwischen den Kammern (17, 18, 19, 20, 17' 18', 19', 20') angeordnet ist.

3. Aufhängungsvorrichtung nach einem der Ansprüche 1 oder 2, bei welcher wenigstens eines der elastischen Elemente (15, 15') des Weiteren ein elastisches Material (17, 17') zwischen der äußeren Oberfläche (25, 25') und der inneren Oberfläche (26, 26') umfasst, das sich wenigstens teilweise um den offenen Hohlraum (16, 16') und die elastisch komprimierbaren Kammern (17, 18, 19, 20, 17', 18', 19', 20') erstreckt.

4. Aufhängungsanordnung nach Anspruch 3, bei welcher das elastische Material (27, 27') ein Elastomer umfasst.

5. Aufhängungsanordnung nach einem der vorstehenden Ansprüche, bei welcher die äußere Oberfläche (25, 25') und/oder die innere Oberfläche (26, 26') von wenigstens einem der elastischen Elemente (15, 15') eine zylindrische und/oder konische Form aufweist.

6. Aufhängungsanordnung nach einem der vorstehenden Ansprüche, bei welcher wenigstens eins der elastischen Elemente (15, 15') eine niedrigere Steifheit in dem Bereich der Kammern aufweist, wenn die Kammern (17, 18, 19, 20, 17', 18', 19', 20') nicht mit einem Hydraulikfluid gefüllt sind, und eine höhere Steifheit aufweist, wenn Hydraulikfluid in den Kammern (17, 18, 19, 20, 17', 18', 19', 20') ist.

7. Aufhängungsanordnung nach einem der vorstehenden Ansprüche, bei welcher die zwei elastischen Elemente (15, 15') jedes wenigstens vier elastisch komprimierbare Kammern (17, 18, 19, 20, 17', 18', 19', 20') umfassen, wobei eine erste (17, 17') und eine zweite elastisch komprimierbare Kammer (18, 18') einander entgegengesetzt sind und eine dritte (19, 19') und eine vierte elastisch komprimierbare Kammer (20, 20') einander entgegengesetzt sind, so dass der offene Hohlraum (16, 16') zwischen der ersten (17, 17') und der zweiten elastisch komprimierbaren Kammer (18, 18') und zwischen der dritten (19, 19') und der vierten elastisch komprimierbaren Kammer (20, 20') angeordnet ist.

8. Aufhängungsanordnung nach einem der vorstehenden Ansprüche, bei welcher das erste und das zweite elastische Element (15, 15') so angeordnet sind, dass die vier elastisch komprimierbaren Kammern (17, 18, 19, 20) des ersten elastischen Elements (15) und die vier elastisch komprimierbaren Kammern (17', 18', 19', 20') des zweiten elastischen Elements (15') zueinander ausgerichtet sind.

9. Aufhängungsanordnung nach einem der vorstehenden Ansprüche, bei welcher die elastischen Elemente (15, 15') so angeordnet sind, dass die erste elastisch komprimierbare Kammern (17, 17') auf der linken Seite sind, die zweiten elastisch komprimierbaren Kammern (18, 18') auf der rechten Seite sind, die dritten elastisch komprimierbaren Kammern (19, 19') an der unteren Seite sind und die vierten elastisch komprimierbaren Kammern (20, 20') auf der oberen Seite bezüglich des offenen longitudinalen Hohlraums (16, 16') sind.

10. Aufhängungsanordnung nach einem der vorstehenden Ansprüche, bei welcher die erste elastisch komprimierbare Kammer (17) des ersten elastischen Elements (15) über eine erste Fluidleitung (21) mit der ersten elastisch komprimierbaren Kammer (17') des zweiten elastischen Elements (15') verbunden ist, die zweite elastisch komprimierbare Kammer (18) des ersten elastischen Elements (15) über eine zweite Fluidleitung (22) mit der zweiten elastisch komprimierbaren Kammer (18') des zweiten elastischen Elements (15') verbunden ist, die dritte elastisch komprimierbare Kammer (19) des ersten elastischen Elements (15) über eine dritte Fluidleitung (23) mit der dritten elastisch komprimierbaren Kammer (19') des zweiten elastischen Elements (15') verbunden ist, und die vierte elastisch komprimierbare Kammer (20) des ersten elastischen Elements (15) über eine vierte Fluidleitung (24) mit der vierten elastisch komprimierbaren Kammer (20') des zweiten elastischen Elements (15') verbunden ist.

11. Windturbine, umfassend:
eine Aufhängungsanordnung nach einem der Ansprüche 1 bis 10,
einen Maschinenträger (1), und
ein Getriebe (6),
wobei das Getriebe (6) mit wenigstens einer Aufhängungsanordnung an dem Maschinenträger (1) aufgehängt ist.

12. Windturbine nach Anspruch 11, bei welcher die elastischen Elemente (15, 15') der Aufhängungsanordnung eine höhere Steifheit in dem Fall einer Rotationsbewegung des Getriebes (6) und eine niedrigere Steifheit in dem Fall einer Neigungsbewegung und/oder einer horizontalen und/oder vertikalen Verlagerung des Getriebes (6) vorsehen.

## Revendications

1. Agencement de suspension pour la suspension d'une première partie (7) d'une éolienne à une seconde partie (6) de l'éolienne, dans lequel un train d'entraînement comprend l'une des deux parties (6, 7) et un support de machine (1) de l'éolienne comprend l'autre partie des deux parties (6, 7), l'agencement de suspension comprenant en outre au moins deux éléments élastiques (15, 15'), dans lequel chacun des éléments élastiques (15, 15') est adapté pour relier et être interposé entre la première et la seconde partie (6, 7) de l'éolienne, chaque élément élastique (15, 15') comprenant :
une surface extérieure (25, 25') adaptée pour être suspendue à la première partie (7) de l'éolienne,
une cavité ouverte (16, 16') limitée par une surface intérieure (26, 26') de l'élément élastique et adaptée pour être suspendue à la seconde partie (6) de l'éolienne, et
au moins deux chambres élastiquement compressibles(17, 18, 19, 20, 17', 18', 19', 20') qui sont séparées l'une de l'autre et qui sont positionnées entre la surface extérieure (25, 25') et la surface intérieure (26, 26') de l'élément élastique, dans lequel chaque chambre compressible élastiquement (17, 18, 19, 20, 17', 18', 19', 20') présente au moins une connexion de ligne (28, 29, 30, 31, 28', 29', 30', 31'), par laquelle un fluide hydraulique peut être chargé et évacué pour l'ajustement du volume de la chambre élastiquement compressible (17, 18, 19, 20, 17', 18', 19', 20'), dans lequel un premier élément élastique (15) des deux éléments élastiques (15, 15') est connecté via des conduits de fluide (21, 22, 23, 24) à un second élément élastique (15') des deux éléments élastiques (15, 15'),
dans lequel les conduits de fluide (21, 22, 23, 24) sont connectés aux connexions de ligne (28, 29, 30, 31, 28', 29', 30', 31') des premier et second éléments élastiques (15, 15') et dans lequel les premier (15) et second (15') éléments élastiques sont positionnés consécutivement le long de leur axe longitudinal.

2. Agencement de suspension selon la revendication 1, dans lequel les chambres (17, 18, 19, 20, 17', 18', 19', 20') d'au moins l'un des éléments élastiques (15, 15') sont en regard les unes des autres de sorte que la cavité ouverte (16, 16') soit positionnée entre les chambres (17, 18, 19, 20, 17', 18', 19', 20').

3. Agencement de suspension selon la revendication 1 ou 2, dans lequel au moins l'un des éléments élastiques (15, 15') comprend en outre un matériau élastique (17, 17') entre la surface extérieure (25, 25') et la surface intérieure (26, 26'), s'étendant au moins en partie autour de la cavité ouverte (16, 16') et des chambres élastiquement compressibles (17, 18, 19, 20, 17', 18', 19', 20').

4. Agencement de suspension selon la revendication 3, dans lequel le matériau élastique (27, 27') comprend un élastomère.

5. Agencement de suspension selon l'une quelconque des revendications précédentes, dans lequel la surface extérieure (25, 25') et/ou la surface intérieure (26, 26') d'au moins l'un des éléments élastiques (15, 15') présente une forme cylindrique et/ou conique.

6. Agencement de suspension selon l'une quelconque des revendications précédentes, dans lequel au moins l'un des éléments élastiques (157, 15') présente une rigidité inférieure dans la région des chambres lorsque les chambres (17, 18, 19, 20, 17', 18', 19', 20') ne sont pas remplies de fluide hydraulique, et présente une rigidité supérieure lorsque le fluide hydraulique est dans les chambres (17, 18, 19, 20, 17', 18', 19', 20').

7. Agencement de suspension selon l'une quelconque des revendications précédentes, dans lequel les deux éléments élastiques (15, 15') comprennent chacun au moins quatre chambres élastiquement compressibles (17, 18, 19, 20, 17', 18', 19', 20'), dans lequel une première (17, 17') et une deuxième chambre compressible élastiquement (18, 18') sont en regard l'une de l'autre et une troisième (19, 19') et une quatrième chambre (20, 20') compressible élastiquement sont en regard l'une de l'autre de sorte que la cavité ouverte (16, 16') soit positionnée entre la première (17, 17') et la deuxième chambre compressible élastiquement (18, 18') et entre la troisième (19, 19') et la quatrième chambre élastiquement compressible (20, 20').

8. Agencement de suspension selon l'une quelconque des revendications précédentes, dans lequel les premier et second éléments élastiques (15, 15') sont positionnés de sorte que les quatre chambres élastiquement compressibles (17, 18, 19, 20) du premier élément élastique (15) et les quatre chambres élastiquement compressibles (17', 18', 19', 20') du second élément élastique (15') soient alignées les unes par rapport aux autres.

9. Agencement de suspension selon l'une quelconque des revendications précédentes, dans lequel les éléments élastiques (15, 15') sont positionnés de sorte que les premières chambres élastiquement compressibles (17, 17') soient sur le côté gauche, que les deuxièmes chambres élastiquement compressibles (18, 18') soient sur le côté droit, que les troisièmes chambres élastiquement compressibles (19, 19') soient sur le côté inférieur et que les quatrièmes chambres élastiquement compressibles (20, 20') soient sur le côté supérieur par rapport à la cavité longitudinale ouverte (16, 16').

10. Agencement de suspension selon l'une quelconque des revendications précédentes, dans lequel la première chambre élastiquement compressible (17) du premier élément élastique (15) est reliée via un premier conduit de fluide (21) à la première chambre élastiquement compressible (17') du second élément élastique (15'), la deuxième chambre élastiquement compressible (18) du premier élément élastique (15) est reliée via un deuxième conduit de fluide (22) à la deuxième chambre élastiquement compressible (18') du second élément élastique (15'), la troisième chambre élastiquement compressible (19) du premier élément élastique (15) est reliée via un troisième conduit de fluide (23) à la troisième chambre élastiquement compressible (19') du second élément élastique (15') et la quatrième chambre élastiquement compressible (20) du premier élément élastique (15) est reliée via un quatrième conduit de fluide (24) à la quatrième chambre élastiquement compressible (20') du second élément élastique (15').

11. Eolienne comprenant :
un agencement de suspension selon l'une quelconque des revendications 1 à 10,
un support de machine (1) et
un train d'engrenages (6),
dans laquelle le train d'engrenages (6) est suspendu avec au moins un agencement de suspension au support de machine (1).

12. Eolienne selon la revendication 11, dans laquelle les éléments élastiques (15, 15') de l'agencement de suspension fournissent une rigidité supérieure dans le cas d'un mouvement de rotation du train d'engrenages (6) et une rigidité inférieure dans le cas d'un mouvement d'inclinaison et/ou d'un déplacement horizontal et/ou vertical du train d'engrenages (6).
